# EUROPEAN PATENT SPECIFICATION

(11) **EP 1 370 958 B1**
(45) Date of publication and mention of the grant of the patent: **16.01.2013**
(21) Application number: 01959658.4
(22) Date of filing: 09.08.2001
(51) Int. Cl.: H04L 12/26, H04L 29/08

(54) **WIRELESS COMMUNICATION NETWORKS FOR PROVIDING REMOTE MONITORING OF DEVICES**
DRAHTLOSE KOMMUNIKATIONSNETZE ZUR BEREITSTELLUNG EINER FERNÜBERWACHUNG VON EINRICHTUNGEN
RESEAUX DE COMMUNICATION SANS FIL SERVANT AU CONTROLE A DISTANCE DE DISPOSITIFS

(30) Priority: 20.03.2001 US 812809
(43) Date of publication of application: 17.12.2003
(60) Divisional application: 11177429.5
(73) Proprietor: SIPCO LLC, Atlanta, GA 30339 (US)
(72) Inventor: PETITE, Thomas, D., Atlanta, GA 30339 (US)
(74) Representative: Rehberg Hüppe + Partner
(86) International application number: PCT/US2001/024869
(87) International publication number: WO 2002/075565

(56) References cited:
- WO-A-00/36812
- WO-A-98/10393
- WO-A1-00/55825
- US-A- 4 611 198
- US-A- 5 655 219
- US-A- 5 726 984
- US-A- 5 917 629
- US-A- 6 141 347
- US-A- 6 157 464
- US-B1- 6 174 205
- US-B1- 6 181 284
- US-B1- 6 188 354

## Description

### FIELD OF THE INVENTION

The present invention generally relates to systems for monitoring and/or controlling a plurality of remote devices via a host computer connected to a wide area network (WAN), and more particularly relates to systems and methods for managing communication between the host computer and the plurality of remote devices.

### BACKGROUND OF THE INTENTION

There are a variety of systems for monitoring and/or controlling any of a number of systems and/or processes, such as, for example, manufacturing processes, inventory systems, emergency controls systems, personal security systems, residential systems, and electric utility meters to name a few. In many of these "automated monitoring systems," a host computer in communication with a wide area network monitors and/or controls a plurality of remote devices arranged within a geographical region. The plurality of remote devices typically use remote sensors and controllers to monitor and respond to various systems parameters to reach desired results. A number of automated monitoring systems use computers or dedicated microprocessors in association with appropriate software to process system inputs, model system responses, and control actuators to implement corrections within a system.

Various schemes have been proposed to facilitate communication between the host computer and the remote devices within the system, including RF transmission, light transmission (including infra-red), and control signal modulation over the local power distribution network. For example, U.S. Patent No. 4,697,166 to Warnagiris et al. describes a power-line carrier backbone for inter-element communications. As recognized in U.S. Patent No. 5,471,190 to Zimmerman, there is a growing interest in home automation systems and products that facilitate such systems. One system, critically described in the Zimmerman patent, is the X-10 system. Recognizing that consumers will soon demand interoperability between household systems, appliances, and computing devices, the Electronics Industry Association (EIA) has adopted an industry standard, known as the Consumer Electronics Bus (CEBus). The CEBus is designed to provide reliable communications between suitably configured residential devices through a multi-transmission media approach within a single residence.

One problem with expending the use of control systems technology to distributed systems is the cost associated with developing the local sensor-actuator infrastructure necessary to interconnect the various devices. A typical approach to implementing control system technology is to install a local network of hard-wired sensors and actuators along with a local controller. Not only is there expense associated with developing and installing appropriate sensors and actuators, but the added expense of connecting functional sensors and actuators with the local controller is also problematic. Another prohibitive cost is the expense associated with the installation and operational expense associated with programming the local controller.

A wireless communication network adapted for use in an automated monitoring system for monitoring and controlling a plurality of remote devices via a command station is known from PCT Application WO 98/10393. The system includes a number of machine monitors, several repeaters and a command station. The monitors relay machine status information to the repeaters, and the repeaters can repeat the machine status Information to the command station. The machine monitors transmit to the repeaters or directly to the command station. The repeaters receive the original data message from the machine monitor and transmit the data message to the command station or to another repeater.

A home security system for monitoring a home environment including an internet browser connectable to an extranet is known from PCT Application WO 00/36812.

A security and communication system including a plurality of portable radio frequency transmitters and a plurality of radio frequency relays is known from US Patent No. US 4,611,198.

Accordingly, an alternative solution for implementing a distributed control system suitable for monitoring and controlling remote devices that overcomes the shortcomings of the prior art is desired.

### SUMMARY OF THE INVENTION

The present invention provides wireless communication networks for providing remote monitoring of devices. One embodiment of the present invention is generally directed to a cost-effective automated monitoring system and method for monitoring and controlling a plurality of remote devices via a host computer connected to a communication network, such as a wide area network. The automated monitoring system may include one or more sensors to be read and/or actuators to be controlled, ultimately, through a remote applications server via a site controller. The remote applications server and the site controller may communicate via a communication network, such as a wide area network. The sensors and/or actuators are in communication with a plurality of wireless transceivers, which define a primary wireless communication network. The wireless transceivers may transmit and/or receive encoded data and control signals to and from the site controller. Additional communication devices, such as wireless repeaters, may relay information between the wireless transceivers disposed in connection with the sensors and/or actuators and the site controller.

The present invention may be viewed as a wireless communication network adapted for use in an automated monitoring system for monitoring and controlling a plurality of remote devices via a host computer connected to a wide area network. Briefly, in one embodiment, the wireless communication network may comprise a plurality of wireless transceivers having unique identifiers and a site controller. Each of the plurality of wireless transceivers may be configured to receive a sensor data signal from one of the plurality of remote devices and transmit an original data message using a predefined wireless communication protocol. The original data message may comprise the corresponding unique identifier and sensor data signal. Each of the plurality of wireless transceivers may be further configured to receive the original data message transmitted by one of the other wireless transceivers and transmit a repeated data message using the predefined communication protocol. The repeated data message may include the sensor data signal and the corresponding unique identifier. The site controller in communication with at least one of the plurality wireless transceivers, the site controller may be configured to: receive the original data messages and the repeated data messages; identify the remote device associated with the corresponding sensor data signal; and provide information related to the sensor data signal to the wide area network for delivery to the host computer.

The present invention may also be viewed as a wireless communication network for monitoring and controlling a plurality of remote devices. Briefly, in one embodiment, the wireless communication network may comprise a plurality of wireless transceivers having unique identifiers. Each of the plurality of wireless transceivers may be configured to receive a sensor data signal from one of the plurality of remote devices and transmit an original data message using a predefined wireless communication protocol. The original data message may comprise the corresponding unique identifier and sensor data signal. Each of the plurality of wireless transceivers may be configured to receive the original data message transmitted by one of the other wireless transceivers and transmit a repeated data message using the predefined communication protocol. The repeated data message may include the sensor data signal and the corresponding unique identifier. Furthermore, at least one of the plurality of wireless transceivers may be further configured to provide the original data messages and the repeated data messages to a site controller connected to a wide area network. The site controller may be configured to manage communications between the wireless communication network and a host computer connected to the wide area network.

### BRIEF DESCRIPTION OF THE DRAWINGS

The accompanying drawings incorporated in and forming a part of the specification, illustrate several aspects of the present invention, and together with the description serve to explain the principles of the invention. The components in the drawings are not necessarily to scale, emphasis instead being placed upon clearly illustrating the principles of the present invention. Moreover, in the drawings, like reference numerals designate corresponding parts throughout the several views.
FIG. 1 is a block diagram illustrating an embodiment of an automated monitoring system according to the present invention.
FIG. 2 is a block diagram of one of a number of embodiments of a transceiver of FIG. 1 in communication with a sensor of FIG. 1.
FIG. 3 is a more detailed schematic diagram illustrating the connectivity of the WAN of FIG. 1.
FIG. 4 is a block diagram illustrating one of a number of possible embodiments of the site controller of FIG. 1.
FIG. 5 is a table illustrating an embodiment of a message structure for a communication protocol according to the present invention that may be used for communicating between the site controller and transceivers of FIG. 1.
FIG. 6 is a table illustrating various values for the "to address" in the message structure of FIG. 5.
FIG. 7 illustrates three sample messages for the message structure of FIG. 5 according to the present invention.
FIG. 8 is a table illustrating the data section of a downstream message in accordance with the message protocol of FIG. 5.
FIG. 9 is a table illustrating the data section of an upstream message in accordance with the message protocols of FIG. 5.
FIG. 10 to a block diagram illustrating another embodiment of the automated monitoring system according to the present invention.
FIG. 11 is a block diagram illustrating the automated monitoring system of FIG. 1 being used as a primary backbone system for providing remote monitoring and/or controlling services to a secondary being used to providing monitoring being used to provide being implemented to one of a number of embodiments of a collection of wireless communication network for interconnected remote a plurality of remote devices in communication with the primary automated monitoring system of FIG. 1 according to the present invention.

### DETAILED DESCRIPTION OF THE PREFERRED EMBODIMENTS

Having summarized the invention above, reference is now made in detail to the description of the invention as illustrated in the drawings. While the invention will be described in connection with these drawings, there is no intent to limit it to the embodiment or embodiments disclosed therein. On the contrary, the intent is to cover all alternatives, modifications and equivalents included within the scope of the invention as defined by the appended claims,

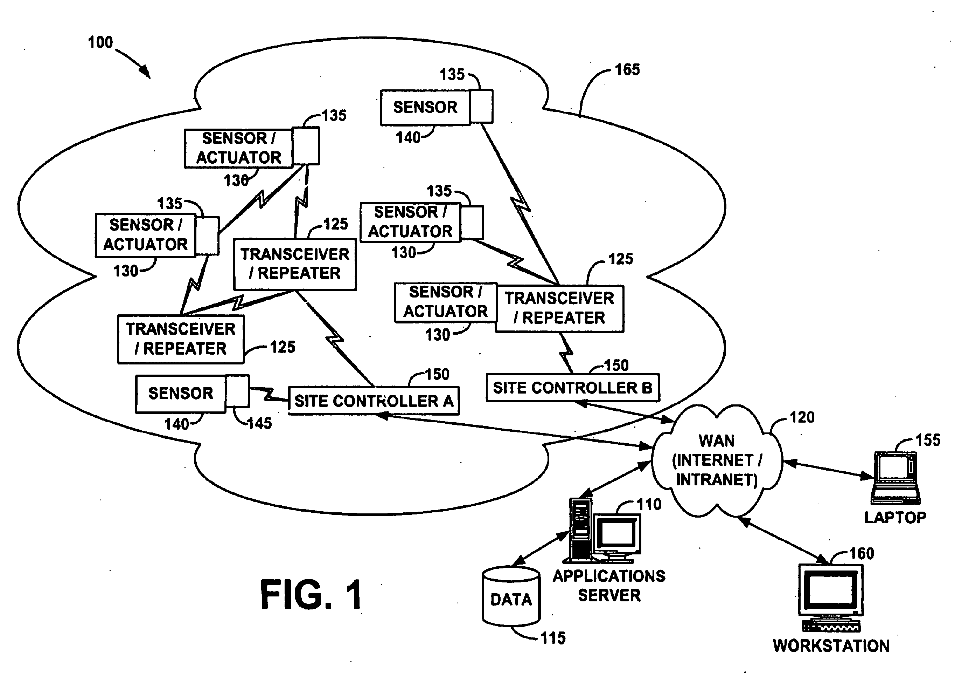

FIG. 1 is a black diagram illustrating one of a number of possible embodiments of an automated monitoring system 100 according to the present invention. Automated monitoring system 100 may comprise one or more applications servers 110, a database 115, a wide area network (WAN) 120, transceivers/repeaters 125, sensor/actuators 130, transceivers 135, sensors 140, transmitters 145, and at least one site controller 150. Each of the sensor/actuators 130 and sensors 140 is integrated with a suitably configured wireless transceiver/repeater 125, a wireless transceiver 135, or wireless transmitter 145. Within the context of this document, a wireless transceiver/repeater 125, a wireless transceiver 135, and a wireless transmitter 145 will be referred to as "wireless communication devices."

Each of the wireless communication devices in automated monitoring system 100 is preferably small in size and may be configured to transmit a relatively low-power signal, such as, for example a radio frequency (RF) signal. As a result, in some applications, the transmission range of a given RF communication device may be relatively limited. Of course, the transmitter power and range may be appropriately designed for the target operating environment. As will be appreciated from the description that follows, this relatively limited transmission range of the wireless communication devices is advantageous and a desirable characteristic of automated monitoring system 100. Although the wireless communication devices are depicted without a user interface such as a keypad, *etc.,* in certain embodiments the wireless communication devices may be configured with user selectable pushbuttons, switches, an alphanumeric keypad, or any other type of user interface device suitably configured with software and/or firmware to accept operator input. Often the wireless communication device will be in communication with a sensor 140 or with a sensor/actuator 130, such as a smoke detector, a thermostat, a security system, *etc*., where user selectable inputs may not be needed.

As illustrated in FIG. 1, the wireless communication devices in automated monitoring system 100 are geographically arranged such that the antenna patterns (not shown) associated with each wireless communication device overlap to create a coverage area 165. In this manner, automated monitoring system 100 may enable a site controller 150 associated with coverage area 165 to communicate with each sensor/actuator 130 and each sensor 140 via any of a plurality of possible communication paths. For instance, site controller 150 may communicate with a specific sensor/actuator 130 via a plurality of distinct communication paths, each of which are defined by one or more wireless communication devices involved in the communication between site controller 150 and the specific sensor/actuator 130. By way of example, one of the plurality of possible communication paths may consist of a wireless connection from site controller 150 to a wireless communication device associated with the specific sensor/actuator 130. Another possible communication path may consist of a wireless connection from site controller 150 to an intermediate wireless communication device and then to the wireless communication device associated with the specific sensor/actuator 130. Further communication paths may include multiple intermediate wireless communication devices in the wireless connection between site controller 150 and the wireless communication device associated with the specific sensor/actuator 130.

As illustrated in FIG. 1, one or more sensors 140 may communicate with at least one site controller 150 via a wireless transmitter 145, a wireless transceiver 135, or a wireless transceiver/repeater 125. Furthermore, one or more sensors/actuators 130 may communicate with at least one site controller 150 via a wireless transceiver 135 or a wireless transceiver/repeater 125. One of ordinary skill in the art will appreciate that in order to send a command from the applications server 110 to a sensor/actuator 130, the wireless communication device associated with the sensors/actuators 130 should be a two-way communication device, such as a transceiver. It will also be appreciated that one or more sensors/actuators 130 may be in direct communication with one or more site controllers 150. It will be further appreciated that the communication medium between the one or more sensor/actuators 130 and the one or more site controller 150 may be wireless or, for relatively closely located configurations, a wired communication medium may be used.

As is further illustrated in FIG. 1, automated monitoring system 100 may comprise a plurality of stand-alone wireless transceiver/repeaters 125. Each stand-alone wireless transceiver/repeater 125, as well as each wireless transceiver 135, may be configured to receive one or more incoming transmissions (transmitted by a remote transmitter 145 or transceiver 135) and to transmit an outgoing signal. This outgoing signal may be any wireless transmission signal, such as, for example, a low-power RF transmission signal, or a higher-power RF transmission signal. Alternatively, where a wired configured is employed, the outgoing signal may be transmitted over a conductive wire, fiber optic cable, or other transmission media. One of ordinary skill in the art will appreciate that if an integrated wireless communication device (e.g., a wireless transmitter 145, a wireless transceiver 135, or a wireless transceiver/repeater 125) is located sufficiently close to site controller 150 such that its output signal can be received by at least one site controller 150, the data transmission signal need not be processed and repeated through either a wireless transceiver/repeater 125 or wireless transceivers 135.

One or more site controllers 150 are configured and disposed to receive remote data transmissions from the various stand-alone wireless transceiver/repeaters 125, integrated wireless transmitters 145, or the integrated wireless transceivers 135. The site controllers 150 may be configured to analyze the transmissions received, convert the transmissions into TCP/IP format, and further communicate the remote data signal transmissions via WAN 120 to one or more applications servers 110 or other devices in communication with WAN 120. One of ordinary skill in the art will appreciate that additional site controllers 150 may function as either a back-up site controller in the event of a site controller failure or can function as a primary site controller to expand the potential size of coverage area 165 of automated monitoring system 100. When implemented as a back-up site controller 150, the second site controller 150 may function when the applications server 110 detects a site controller failure. Alternatively, the second site controller 150 may function to expand the capacity of automated monitoring system 100. A single site controller 150 may accommodate a predetermined number of wireless communication devices. While the number of wireless communication devices may vary based upon individual requirements, in one of a number of embodiments there may be approximately 500 wireless communication devices.

By way of example, a second site controller 150 may double the capacity of a single system. Although not shown, additional site controllers 150 may be added depending on the specific implementation of automated monitoring system 100. The number of wireless communication devices managed by a site controller 150 is limited only by technical constraints such as memory, storage space, *etc.* In addition, the site controller 150 may manage more addresses than devices as some wireless communication devices may have multiple functions such as sensing, repeating, etc. As stated above, automated monitoring system 100 includes an applications server 110 in communication with site controller 150 via WAN 120. Applications server 110 may host any of a variety of application specific software depending on the precise environment in which automated monitoring system 100 is employed. As further described below, the site controller 150 may receive, via WAN 120, information in the form of data and/or control signals from applications server 110, laptop computer 155, workstation 160, and any other device in communication with WAN 120. Site controller 150 may then communicate the data and/or control signals to remote sensor/actuators 130 and/or remote sensors 140. Automated monitoring system 100 may also comprise a database 115 associated with applications server 110. Database 115 may be configured to communicate with applications server 110 and record client specific data or to assist the applications server 110 in deciphering a particular data transmission from a particular sensor 140.

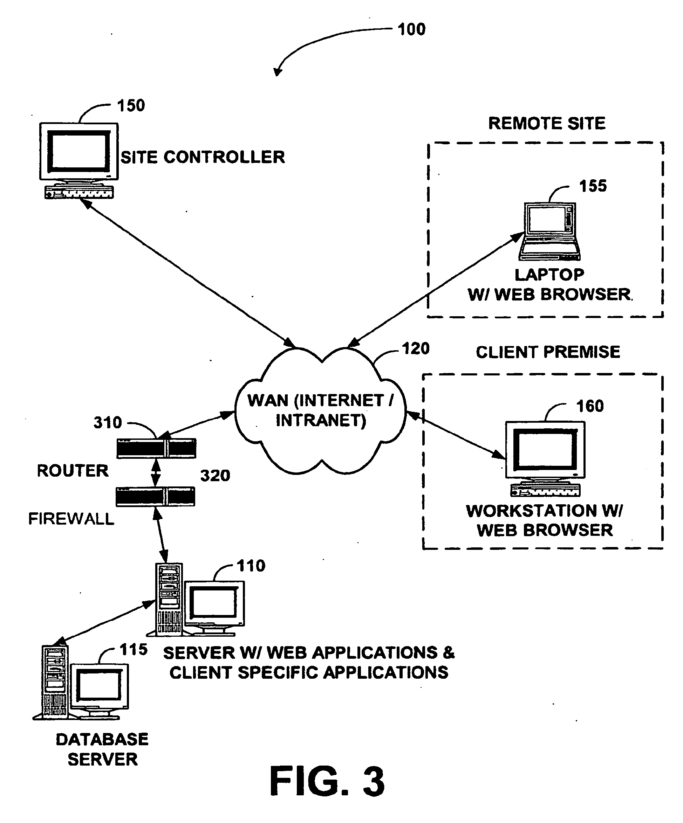

Reference is now made to FIG. 3, which is a block diagram illustrating a transceiver 135 that may be integrated with a sensor 130. As stated above, the characteristics of sensor 130 may vary depending on the environment in which automated monitoring system 100 is implemented. For example, the sensor 130 may be a two-state device such as a smoke alarm, a thermometer, a utility meter, a personal security system controller, or any other sensor. Regardless the specific characteristics of sensor 130, transceiver 135 may include a data interface 305 configured to receive and/or transmit signal to sensor 130. If the signal output from the sensor 130 is an analog signal, the data interface 305 may include an analog-to-digital converter (not shown) to convert the signals. Alternatively, where transceiver 135 and sensor 130 communicate using digital signals, transceiver 135 may include a digital interface (not shown) that communicates with the data interface 305 and the sensor 130.

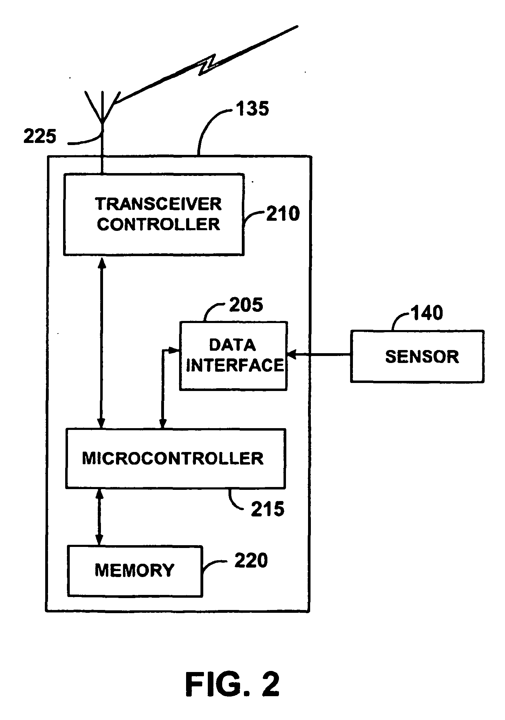

As illustrated in FIG. 2, the sensor 140 may be in communication with the transceiver 135. Transceiver 135 may comprise an RF transceiver controller 210, a data interface 205, a microcontroller 215, a memory 220, and an antenna 225. A data signal forwarded from the sensor 140 may be received by the data interface 205. In those situations where the data interface 205 has received an analog data signal, the data interface 205 may be configured to convert the analog signal into a digital signal before forwarding a digital representation of the data signal to the data controller 215. In one embodiment, each transceiver 135 may be configured with a memory 220 that stores a unique transceiver identifier that identifies the RF transceiver 135.

Transceivers 135 that function in automated monitoring system 100 as both a repeater and an integrated transceiver have two unique addresses. One address indicates messages intended for the repeater; the second address indicates messages for the sensor 140. Data controller 215 evaluates the incoming message to determine which address the message contains, which function is desired, and acts accordingly.

In operation, the RF transceiver 135 receives an incoming message via antenna 225. The transceiver controller 210 receives the incoming message, modifies the received signal, and passes the modified signal onto the microcontroller 215. The microcontroller 215 evaluates the message to determine the intended recipient.

If the intended recipient is the integrated transceiver 135, the microcontroller 215 then prepares the appropriate response as discussed below. This response may include data from the sensor 140. If the intended recipient is the repeater, the microcontroller 215 then prepares the message to be repeated onto the intended recipient according to the message protocol discussed below.

Of course, additional and/or alternative configurations may also be provided by a similarly configured transceiver 135. For example, a similar configuration may be provided for a transceiver 135 that is integrated into, for example, a carbon monoxide detector, a door position sensor, etc. Alternatively, system parameters that vary across a range of values may be transmitted by transceiver 135 as long as data interface 205 and microcontroller 215 are configured to apply a specific code that is consistent with the input from sensor 140. Automated monitoring system 100 may enable the target parameter to be monitored. The transceiver 135 may be further integrated with an actuator (not shown). This provides the ability to remotely control systems such as HVAC systems, lighting systems, etc. via the applications server 110 (FIG. 1). Further information regarding use of actuators in automated monitoring system 100 may be found in commonly assigned U. S. Patent Application Serial No. 09/811,076, entitled "System and Method for Monitoring and Controlling Remote Devices," and filed March 16, 2001.

One of ordinary skin in the art will appreciate that the various communication devices in automated monitoring system 100 may be configured with a number of optional power supply configurations. For example, a personal mobile transceiver may be powered by a replaceable battery. Similarly, a repeater may be powered by a replaceable battery that may be supplemented and/or periodically charged via a solar panel. These power supply circuits, therefore, may differ between communication device depending upon the devices being monitored, the related actuators to be controlled, the environment, and the quality of service required. In the case of a transceiver acting as both a repeater and a remote monitoring device, the transceiver may be independently powered so as not to drain the sensor or actuator. Those skilled in the art will appreciate how to meet the power requirements of the various communication devices. As a result, it is not necessary to further describe a power supply suitable for each communication device and each application in order to appreciate the concepts and teachings of the present invention.

As stated above, automated monitoring system 100 may be used in a variety of environments to monitor and/or control any of a variety of types of sensors 140 and sensors/actuators 130. Regardless of the particular environment and the type of remote device employed in automated monitoring system 100, transceiver 135 may further comprise logic configured to receive data from sensor 140 and/or sensor/actuator 130, retrieve the unique identifier from memory 220, and generate a transmit message using a predefined communication protocol being implemented by the wireless communication network, which is described in detail below. Nonetheless, one of ordinary skill in the art will appreciate that various other communication protocols may be used in accordance with the present invention.

Depending on the specific implementation of sensor 140 and/or sensor/actuator 130, the data may be formatted in a variety of ways. For example, as stated above, the data received by data interface 205 may be an analog or a digital signal. Regardless the specific configuration of sensor 140 and/or sensor/actuator 130, data interface 205 is configured to receive the sensor data.

The transmit message generated may comprise the unique identifier stored in memory 220 and the sensor data. As described above, the transmit message may be formatted in the message structure described below. More importantly, the transmit message may be configured such that the transmit message may be received by the site controller 150 via the wireless communication network and such that the site controller 150 may identify the sensor 140 and/or sensor/actuator 130 and notify applications server 110 of the transmit message.

One of ordinary skill in the art will appreciate that the logic described above, may be implemented in hardware, software, firmware, or a combination thereof. As illustrated in FIG. 2, in one of a number of possible embodiments, the logic is implemented in software or firmware that is stored in memory 220 and that is executed by microcontroller 215. If implemented in hardware, as in alternative embodiments, the logic may be implemented in any one or combination of volatile memory elements (*e.g*., random access memory (RAM, such as DRAM, SRAM, SDRAM, *etc*.)) and nonvolatile memory elements (*e.g*., ROM, hard drive, tape, CDROM, *etc*.). Memory 220 may incorporate electronic, magnetic, optical, and/or other types of storage media. Memory 220 may also have a distributed architecture, where various components are situated remote from one another. If implemented in hardware, as in alternative embodiments, the logic may be implemented with any or a combination of the following technologies, which are all well known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), *etc.*

Furthermore, one of ordinary skill in the art will appreciate that the integration of sensor 140 and/or sensor/actuator 130 and transceiver 135 may be accomplished in a variety of ways. For example, in one embodiment, transceiver 135 may be included within sensor 140 and/or sensor/actuator 130 as part of its internal configuration. In other embodiments, transceiver 135 may be externally attached to sensor 140 and/or sensor/actuator 130. In further embodiments, transceiver 135 may be installed in close proximity to sensor 140 and/or sensor/actuator 130 such that transceiver 135 and sensor 140 and/or sensor/actuator 130 communicate via a wired or wireless connection.

Referring again to FIG. 2, during normal operation, transceiver 135 may receive a command message on antenna 225 via a message protocol. The command message may be initiated from site controller 150, applications server 110, laptop 155, workstation 160, or any other device connected to WAN 120. In this manner, the command message may be used to request data related to the electricity consumption of a particular electric meter 300. Microcontroller 215 may evaluate the received message to determine if the "to" address is its own unique address. If it is, then the microcontroller 215 evaluates the command and prepares a response message.

In response to the command message, microcontroller 215 receives the senosr data related to the sensor 140 and/or sensor/actuator 130. In one embodiment, the sensor data may be retrieved by initiating a request to the sensor 140 and/or sensor/actuator 130. In another embodiment, the data may be stored in memory 220, in which case microcontroller 215 retrieves the data from memory 220. Microcontroller 215 may also retrieve the unique address from memory 220. Then, the microcontroller 215 formats a transmit signal in response to the command message as described above. Microcontroller 215 then communicates the transmit signal to transceiver controller 210, which provides the transmit signal to the wireless communication network. The transmit signal may be delivered to the site controller 150. Depending on where the command message was generated, the transmit signal may be forwarded to applications server 110, laptop 155, workstation 160, a computing device operated by a user, or any other device connected to WAN 120.

Of course, additional and/or alternative configuration may also be provided by a similarly configured transceiver. For example, a similar configuration may be provided for a transceiver that is integrated into, for example, a carbon monoxide detector, a door position sensor, etc. Alternatively, system parameters that vary across a range of values may be transmitted by transceiver 135 as long as data interface 205 and microcontroller 215 are configured to apply a specific code that is consistent with the input from sensor 140. As long as the code is known by the application server 110 or workstation 160, the target parameter may be monitored with the present invention. The RF transceiver 135 may be further integrated with an actuators. This would provide the user with the ability to remotely control systems such as HVAC systems, lighting systems, *etc*. remotely via the applications server 260. Further information regarding the integration of an actuator can be found in Serial No. 09/811,076. "System and Method for Monitoring and Controlling Remote Devices," filed March 16. 2001.

It will be appreciated by persons skilled in the art that the various RF communication devices illustrated and described may be configured with a number of optional power supply configurations. For example, a personal mobile transceiver may be powered by a replaceable battery. Similarly, a stand-alone RF transceiver/repeater may be powered by a replaceable battery that may be supplemented and/or periodically charged via a solar panel. These power supply circuits, therefore, may differ between RF communication devices depending upon the devices being monitored, the related actuators to be controlled, the environment, and the quality level of service required. In the case of an RF transceiver acting as both a repeater and a remote monitoring device, the RF transceiver may be independently powered so as not to drain the sensor or actuator. Those skilled in the art will appreciate the various power requirements of the various RF communication devices. As a result, it is not necessary to further describe a power supply suitable for each RF communication device and each application in order to appreciate the concepts and teachings of the present invention.

Reference is now made to FIG. 3, which illustrates the external connectivity of WAN 120 of FIG. 1 in accordance with the present invention. Site controller 150 may be configured to transmit control signals and receive data signals using the open data packet protocol described in detail below. Site controller 150 is preferably interconnected permanently on WAN 120 and configured to receive data signals from the wireless communication devices and translate the data signals for transfer to applications servers 110 via WAN 120. Site controller 150 may translate the received data signals into any appropriate protocol for delivery via WAN 120. For example, in one embodiment site controller 150 translates the received data signals into transmission control protocol/Internet protocol (TCP/IP) for delivery via WAN 120. As stated above, applications server 110 may be configured for communication with WAN 120 via, for example, router 310 and further protected and buffered by firewall 320. Applications server 110 may also configured with web applications and client specific applications as needed for operation of automated monitoring system 100. Consistent with the concepts and teachings of the present invention, applications server 110 may be assisted in its task of storing and making available client specific data by database 115.

As further illustrated in FIG. 3, a client workstation 160 may include a Web browser for facilitating communication with applications server 110, database 115, and/or site controller 150. Alternatively, clients may access WAN 120 via a remote laptop 155 or other computing devices (not shown) configured with a compatible Web browser or other user interface. In this way, the applications server 110 may provide client specific data upon demand.

As stated above, communication between site controller 150 and sensors/actuators 130 and sensors 140 is accomplished using an open data packet protocol in accordance with the present invention. Because the wireless communication devices are geographically arranged such that their respective antenna patterns overlap to create a coverage area 165, site controller 150 may communicate with each sensor/actuator 130 and each sensor 140 via any of a plurality of possible communication paths. Each of the communication paths are defined by one or more wireless communication devices involved in the communication between site controller 150 and the target sensor/actuator 130 and/or sensor 140. For instance, site controller 150 may communicate with a specific sensor/actuator 130 via a plurality of distinct communication paths. By way of example, one of the plurality of possible communication paths may consist of a wireless connection from site controller 150 to a wireless communication device associated with the specific sensor/actuator 130. Another possible communication path may consist of a wireless connection from site controller 150 to an intermediate wireless communication device and then to the wireless communication device associated with the specific sensor/actuator 130. Further communication paths may include multiple intermediate wireless communication devices in the wireless connection between site controller 150 and the wireless communication device associated with the specific sensor/actuator 130. In this manner, site controller 150 may communicate with sensors/actuators 130 and/or sensors 140 that are located a greater distance from the site controller 150 by having messages repeated by successive wireless communication devices along one of the communication paths.

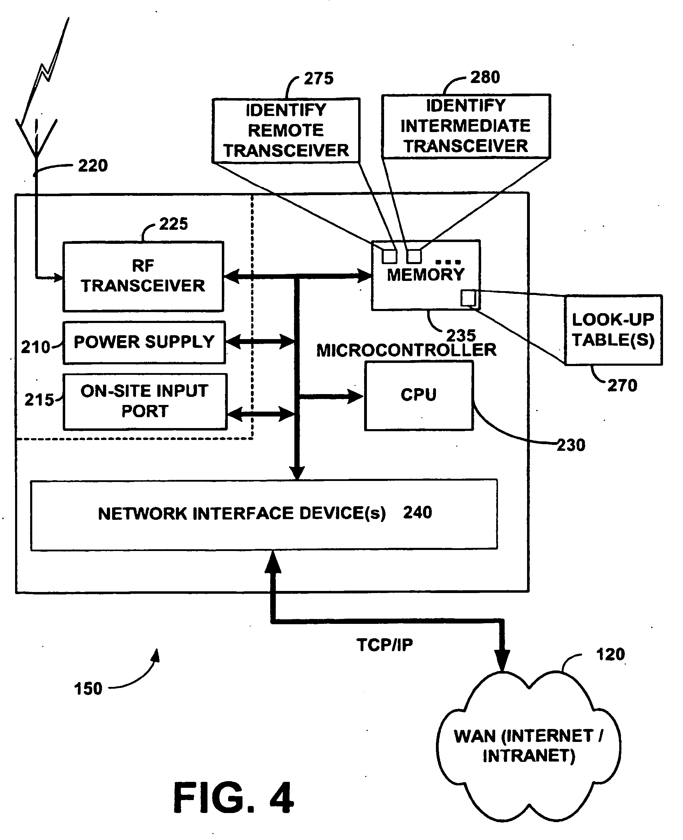

Having illustrated and described the operation of the various combinations of communication devices with the sensor 140 and sensor/actuators 130 (FIG. 1), reference is now made to FIG. 4, which is a block diagram further illustrating one embodiment of a site controller 150. A site controller 150 may comprise an antenna405, a transceiver controller 410, a central processing unit (CPU) 415, memory 420, a network interface device, such as a network card 425, a digital subscriber line (DSL) modem 430, an integrated services digital network (ISDN) interface card 435, as well as other components not illustrated in FIG. 4, which may be configured to enable a TCP/IP connection to the WAN 120 (FIG. 1). Site controller 150 may also include a power supply 450 for powering the site controller 150. The power supply 450 may be one of many known power supplies. In addition, the site controller 150 may include an on-site input port 455, which allows a technician to communicate directly with site controller 150. Further information regarding the function, operation, and architecture of the site controller 150 may be found in commonly assigned U. S. Patent Application "System and Method for Controlling Communication Between a Host Computer and Communication Devices Associated with Remote Devices in an Automated Monitoring System,".

The transceiver controller 410 may be configured to receive incoming transmissions via the antenna 405. Each of the incoming transmissions are consistently formatted in the messages protocol as described below. The site controller 150 may be configured such that the memory 420 includes a look-up table 425 configured for identifying the various remote and intermediate communication devices used in generating and transmitting the received data transmission. As illustrated in FIG. 4, site controller 130 may include an "Identify Remote Transceiver" memory sector 440 and and "Identify Intermediate Transceiver" memory sector 445. Programmed or recognized codes within memory 425 may also be provided and configured for controlling the operation of a CPU 415 to carry out the various functions that are orchestrated and/or controlled by the site controller 150. For example, memory 420 may include program code for controlling the operation of the CPU 415 to evaluate an incoming data packet to determine what action needs to be taken. In this regard, one or more look-up tables 425 may also be stored within the memory 420 to assist in this process. Furthermore, the memory 420 may be configured with program code configured to identify a remote transceiver or identify an intermediate RF transceiver. Function codes and RF transmitter and/or RF transceiver identifiers may all be stored with associated information within the look-up tables 425.

Thus, one look-up table 425 may be provided to associate transceiver identifications with a particular user. Another look-up table 425 may be used to associate function codes associated with the message protocol. For example, a look-up table 425 may include a unique code designating various functions, such as test, temperature, smoke alarm active, security system breach, etc. In connection with the lookup table(s) 425, the memory 420 may also include a plurality of code segments that are executed by the CPU 415, which may in large part control operation of the site controller 150. For example, a first data packet segment may be provided to access a first lookup table to determine the Identity of the transceiver that transmitted the received message. A second code segment may be provided to access a second lookup table to determine the proximate location of the transceiver that generated the message. A third code segment may be provided to identify the content of the message transmitted (not shown). Namely, is it a fire alarm, a security alarm, an emergency request by a person, a temperature control setting, *etc.* In accordance with the present invention, additional, fewer, or different code segments may be provided to carry out different functional operations and data signal transfers.

The site controller 150 may also include one or more network interface devices to facilitate via WAN 120. For example, the site controller 150 may include a network card 425, which may allow the site controller 150 to communicate across a local area network to a network server. This network server may function as a backup site controller 150 to the WAN 120. Alternatively, the site controller 150 may contain a DSL modem 430, which may be configured to provide a link to a remote computing system by way of the public switched telephone network (PSTN). In yet another embodiment, the site controller 150 may include an ISDN card 435 configured to communicate via an ISDN connection with a remote system. One of ordinary skill in the art will appreciate that various other communication interfaces may be provided to serve as primary and/or backup links to the WAN 120 (FIG. 1) or to local area networks that might serve to permit local monitoring of the status of the site controller 150 and for data packet control.

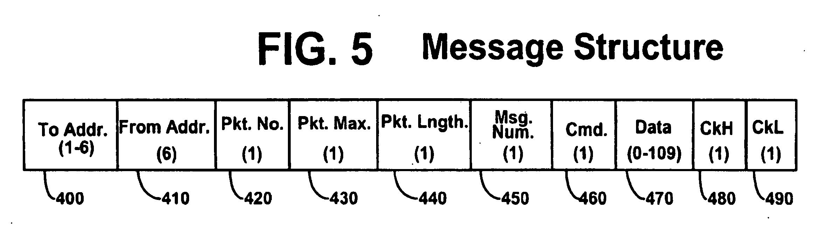

Communication between the site controller 150 and the communication devices within coverage area 165 may be implemented using a data packet protocol according to the present invention. FIG. 5 sets forth one embodiment of a message structure for the data packet protocol of the present invention. Messages transmitted within the automated monitoring system 100 may consist of a "to" address 500, a "from" address 510, a packet number 520, a number of packets in a transmission 530, a packet length 540, a message number 550, a command number 560, data 570 (if applicable), and a check sum error detectors (CKH 580 and CKL 590).

The "to" address 500 indicates the intended recipient of the packet. This address can be scalable from one to six bytes based upon the size and complexity of automated monitoring system 100. By way of example, the "to" address 500 may indicate a general message to all transceivers, to only the repeaters, or to a single integrated transceiver. In a six byte "to" address 500, the first byte indicates the transceiver type - to all transceivers, to some transceivers, or a specific transceiver. The second byte may be the identification base, and bytes three through six may be used for the unique transceiver address (either stand-alone or integrated). The "to" address 500 may be scalable from one byte to six bytes depending upon the intended recipient(s).

The "from" address 510 identifies the transceiver originating the transmission and may be a six-byte unique address. The "from" address 510 may be the address of the site controller 150 (FIG. 1) when the site controller 150 (FIG. 1) requests data, or this may be the address of the integrated transceiver responding to a request for information from the site controller 150 (FIG. 1).

The packet number 520, the packet maximum 530, and the packet length 540 may be used to concatenate messages that are greater than a predetermined length. The packet maximum 530 indicates the number of packets in the message. The packet number 520 may be used to indicate a packet sequence number for a multiple-packet message.

The message number 550 may be assigned by the site controller 150. Messages originating from the site controller 150 may be assigned an even number, while responses to the site controller 150 may have a message number equal to the original message number plus one. Thus, the site controller 150 may increments the message number 550 by two for each new originating message. This may enable the site controller 150 to coordinate the incoming responses to the appropriate command message.

The command number 560 may designate a specific data request from the receiving device. One of ordinary skill in the art will appreciate that, depending on the specific implementation of automate monitoring system 100, the types of commands may differ. In one embodiment, there may be two types of commands: device specific and non-device specific. Device specific commands may control a specific device such as a data request or a change in current actuator settings. Commands that are not device specific may include, but are not limited to, a ping, an acknowledge, a non-acknowledgement, downstream repeat, upstream repeat, read status, emergency message, and a request for general data to name a few. General data may include a software version number, the number of power failures, the number of resets, etc.

The data field 570 may contain data as requested by a specific command. The requested data may be any value. By way of example, test data can preferably be encoded in ASCII (American Standard Code for Information Interchange) or other known encoding systems as known in the art. The data field 570 of a single packet may be scalable up to a predetermined length. When the requested data exceeds the predetermined length, the data controller of transceiver 135 may divide the data into an appropriate number of sections and concatenates the series of packets for one message using the packet identifiers as discussed above.

While specific byte lengths for sections of the message are being set forth, it would be obvious to one of ordinary skill in the art to vary the byte lengths based upon system needs. Less complex systems, etc. could use smaller sized sections, whereas more complex systems could increase the byte lengths.

Checksum fields 580 and 590 may be used to detect errors in the transmissions. In one embodiment, any error can be detected via cyclic redundancy check sum methodology. This methodology treats the message as a large binary number and divides the binary number by a generating polynomial (such as CRC-16). The remainder of this division is then sent with the message as the checksum. The receiver then calculates a checksum using the same methodology and compares the two checksums. If the checksums do not match, the packet or message will be ignored. While this error detection methodology is preferred, one of ordinary skill in the art will appreciate that other error detection systems may be implemented.

As stated above, automated monitoring system 100 may employ wireless and/or wired communication technologies for communication between site controller 150 and the various communication devices. In one embodiment, communication between site controller 150 and the communication devices may be implemented via an RF link at a basic rate of 4,800 bits per second (bps) and a data rate of 2400 bps. All the data may be encoded in the Manchester format such that a high to low transition at the bit center point represents a logic zero and a low to high transition represents a logic one. One of ordinary skill in the art will appreciate that other RF formats may be used depending upon design needs. By way of example, a quadature phase shift encoding method may be used, thereby enabling automated monitoring system 100 to communicate via hexadecimal instead of binary.

While the message indicates specific byte length for each section, only the order of the specific information within the message is constant. The byte position number in individual transmissions may vary because of the scalability of the "to" address 500, the command byte 560, and the scalability of the data 570.

The message may further include a preface and a postscript (not shown). The preface and postscripts are not part of the message body but rather serve to synchronize the control system and to frame each packet of the message. The packet begins with the preface and ends with a postscript. The preface may be a series of twenty-four logic ones followed by two bit times of high voltage with no transition. The first byte of the packet can then follow immediately. The postscript may be a transition of the transmit data line from a high voltage to a low voltage, if necessary. It may be less desirable to not leave the transmit data line high after the message is sent. It would be obvious to one of ordinary skill in the art to modify the preface and the postscript as necessary based on specific design needs.

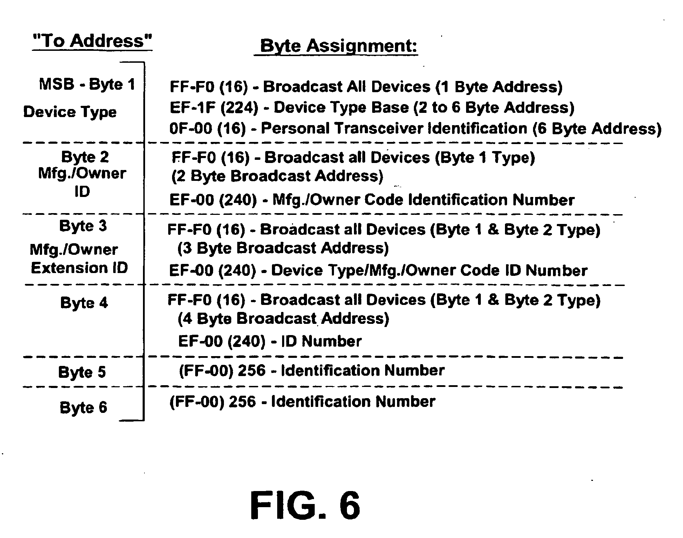

FIG. 6 sets illustrates one embodiment of a byte assignment for the "to" address 500 of FIG. 5. One of ordinary skill in the art will appreciate that various byte assignments may be used within "to" address field 500. For example, in one embodiment, "to" address 500 consists of six bytes. The first byte (Byte 1) may indicate the device type. The second byte (Byte 2) may indicate the manufacturer or the owner. The third byte (Byte 3) may be a further indication of the manufacturer or owner. The fourth byte (Byte 4) may indicate either that the message is for all devices or that the message is for a particular device. If the message is for all devices, the fourth by may be a particular code. If the message is for a particular device, the fourth, fifth, and sixth bytes (Byte 5 and Byte 6) may include the unique identifier for that particular device.

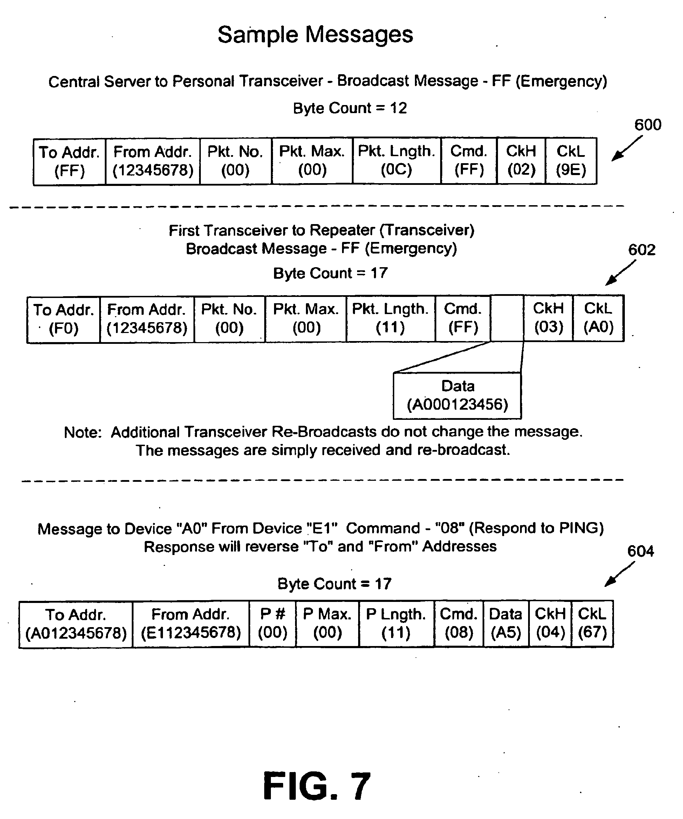

FIG. 7 illustrates three sample messages using the open data packet protocol described above. The first message 700 illustrates the broadcast of an emergency message "FF" from a central server with an address "0012345678" to a integrated transceiver with an address of "FF."

The second message 702 illustrates how the first message 700 may be sent to a stand-alone wireless communication device. In this manner, emergency message "FF" from a central server with address "00123456578" is first sent to stand-alone wireless device "FO." The second message 702, further contains additional command data "A000123456" that may be used by the wireless communication device to identify further wireless communication devices to send the signal through on the way to the destination device.

The third message 704 illustrates how the open data packet protocol of the present invention may be used to "ping" a remote wireless communication device in order to determine the status of the wireless communication device. In this manner, source unit "E112345678" originates a ping request by sending command "08" to a transceiver identified as "A012345678." The response to the ping request may be as simple as reversing the "to address" and the "from address" of the command such that a healthy wireless communication device may send a ping message back to the originating device. Automated monitoring system 100 may be configured to expect a return ping within a specific time period. Operators of automated monitoring system 100 may use the delay between the ping request and the ping response to model system loads and to determine if specific system parameters might be adequately monitored and controlled with the expected feedback transmission delay.

Returning to FIG. 1, the repeater 125 acts as a communications bridge between a remote device and the site controller 150 when the remote device cannot reliably communicate directly with the site controller 150. In this manner, the repeater 125 may communicate in two or more modes: normal, emergency, etc.

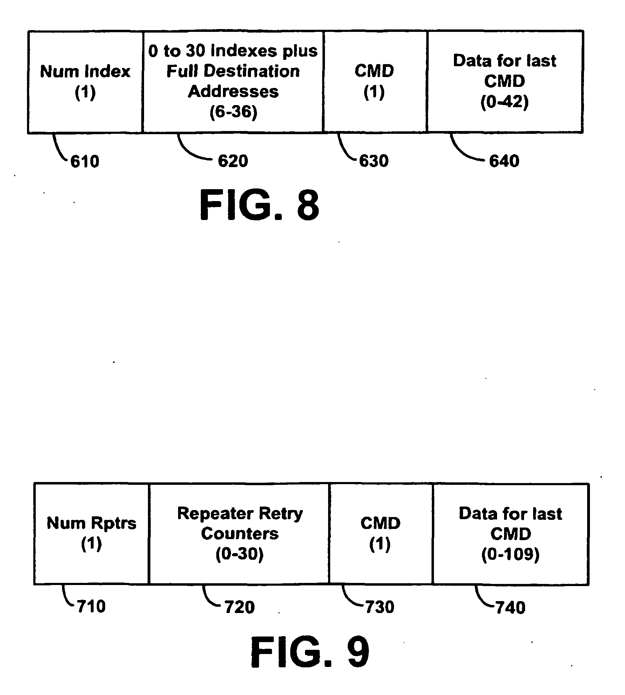

For example, during normal communication, the repeater 125 may have two functions: repeating messages (including repeating upstream messages) and repeating downstream messages. Upstream messages are transmissions to another repeater 125 or remote device. Downstream messages are transmissions to another repeater 125 or site controller 150. Responding to common messages involves taking the appropriate action and sending a response to the site controller 150. The repeater 125 may modify the message depending upon the stream direction. An exemplary format for the data field 570 (FIG. 5) for a downstream repeated message is set forth in FIG. 8. For instance, the data field 570 may have a "Num Index" 810, which may identify the number of indexes being sent with the downstream repeat. The indexes 820 may contain the downstream path including the intended recipient address. The "CMD" field 830 may identify the particular command for the intended receiving device. The "Data for last CMD" field 840 may include either an index table of downstream addresses or upstream addresses.

FIG. 9 sets forth an example of the structure for the data field 570 (FIG. 5) of an upstream message. The "number of repeaters" 910 may indicate the number of upstream repeaters. The "Repeater Retry Counters" 920 may indicate the number of retries by each repeater in the upstream. The "CMD" field 930 may indicate the command sent to the intended remote device. The "Data for last CMD" 940 may indicate the data in response to the original command from the intended remote device.

Examples of commands that are sent directly from the site controller 150 to the repeater 125 include load upstream addresses. This command clauses the repeater 125 to store the addresses to which the repeater 125 sends messages when communicating upstream. The loading of the upstream addresses also initiates a transceiver functioning as a repeater 125. The response to a load command may be a status message that is sent to the site controller 150.

Another example of a communication mode is emergency mode. In this mode, emergency messages are automatically transmitted upstream regardless of what other actions may be taking place. Unlike normal communications, emergency messages are sent unsolicited from the integrated transceiver 135 to the site controller 150.

During all modes of communication, each of the communication devices may expect a response message to all messages sent. There may be at least two acknowledgements: a positive acknowledgement, a negative acknowledgement, etc. The positive acknowledgement may be sent whenever a message is received and understood. A negative acknowledgement may be sent whenever the message is not received and understood correctly or whenever an expected message is not received. A negative acknowledgment may be followed by a predetermined number of retries.

Further information regarding the stricture and operation of the data packet protocol implemented in automated monitoring system 100 may be found in commonly assigned U. S. Patent Application "system and Method for Interconnecting Remote Devices in an Automated Monitoring System,".

Referring again to FIG. 1, during normal operations, the site controller 150 acts as the communications master. Thus, the site controller 150 may initiate all communications with the wireless communications devices, except emergency messages described below. In addition to initiating command messages, the site controller 150 also tracks response messages. This tracking allows the site controller 150 to monitor the operational status of the wireless communication devices.

In addition to orchestrating communications with the wireless communication devices, the site controller 150 maintains current databases of information regarding the automated monitoring system 100, such as, for example, the function of the wireless communication devices, the unique address for each of the wireless communication devices, and current data contained in response messages. One of ordinary skill in the art will appreciate that site controller 150 may contain information related to any of a variety of other aspects of automated monitoring system 100.

As stated above, the site controller 150 also controls communications with the applications server 110. When communicating with the applications server 110, .the site controller 150 receives requests for information, commands, etc. and sends the appropriate response. The applications server 110 maintains the requested information and/or commands in such a way that a user can access the information via a remote desktop 155, remote laptop 160, or any other device configured for communication with WAN 120.

Furthermore, the site controller 150 may be configured to maintain a database of the wireless communication devices and their unique addresses. The unique addresses may be assigned such that the site controller 150 may easily send messages to one wireless communication device, a group of wireless communication devices, or all of the wireless communication devices.

Using the site controller 150 as a communications master and maintaining individual device information at the site controller 150 enables the wireless communication devices to be simplified. The simplification of the wireless communication devices has two main advantages: (1) simplifying the construction of the wireless communication device and (2) decreasing cost. The wireless communication device may be simplified because of a reduced need for large memory and/or storage devices. As well-known in the art, memory and storage devices increase in cost as they increase in size. Therefore, decreasing the size of the memory and/or storage reduces the construction and operating costs of the wireless communication devices.

The site controller 150 sends messages to the wireless communication devices using the open data packet protocol described above. Initially, the site controller 150 maps all of the wireless communication devices so as to "learn" all the unique addresses and the necessary communication paths. To do this mapping, the site controller 150 issues a command to document the down-stream addresses and the upstream addresses for each communication path associated with a wireless communication device. The site controller 150 logs the response data from the wireless communication devices into the appropriate databases. Messages from the site controller 150 travel downstream to the intended wireless communication device(s). Messages from the wireless communication devices(s) travel upstream to the site controller 150. When mapping the communication paths for each of the wireless communication devices, the site controller 150 "learns" the unique address of each wireless communication device, the addresses of each wireless communication device that can directly and reliably communicate with each transceiver/repeater(s) 125 in a downstream path, the unique address of each transceiver/repeaters) 125 in a downstream path, the upstream addresses for the wireless communication device, and the downstream addresses for the wireless communication device.

When sending command messages, the site controller 150 expects an acknowledgement to each command. A command is considered to be not acknowledged when either the site controller 150 fails to receive a positive acknowledgement from the addressed wireless communication device within a first time period, fails to detect the re-transmission of the command message by a transceiver/repeater 125 within a second time period, or receives a negative acknowledgement from a transceiver/repeater 125 in the communication path of the wireless communication device. If the site controller 150 receives a negative acknowledgement, the site controller 150 can then log the failed message and retransmit the message. This re-transmission can occur a predetermined number of times. It should be noted the first time period may be longer than the second time period. In the above cases, the first time period is long enough to ensure receipt of the preamble of the response message when there are multiple transceiver/repeater(s) 125 in the communications path. The second time period is long enough to either receive the preamble of the response message (if no repeaters are in the communications path) or to hear the preamble of the command message being re-transmitted by the first transceiver/repeater 125 in the communication path of the wireless communication device.

After initializing and during normal operation, the site controller 150 may poll each of the remote sensor/actuators according to a predetermined schedule. During this process, the site controller 150 requests the current operating status of each of the sensors/actuators 135. The status of a sensor/actuator device 135 depends upon the type of device. For example, a smoke detector's status may be operational/non-operational. In contrast, a utility meter's status may be the utility usage that has occurred since the last polling. A thermostat's status response may be the actual temperature and the desired temperature. The information sent in response to a status poll may vary depending upon the particular configuration of the sensor/actuator 135. This information is maintained by the site controller 150 and may be sent to the applications server 110 upon request. The predetermined schedule has flexibility based upon the number of failed attempts and any emergency messages. To poll the device, the site controller 150 sends a "read status" message. The command message is considered complete upon receipt of the response message. The command message is considered failed upon receipt of a negative acknowledgement. After a negative acknowledgement, the site controller 150 retries the command six more times and logs all failed attempts.

To facilitate communications with the applications server 110, the site controller 150 may maintain database files of information. The site controller 150 may maintain communication databases that store the device failures, as discussed above, and that store the emergency messages. These database stored logs can contain the unique address of the wireless communication device, a code representing a present condition, and a date/time stamp. Any failures to communicate with the applications server 110 are also logged into the appropriate database. These databases may have a predetermined size and may be forwarded to the applications server 110 when the databases are a specific percentage full or upon request by the applications server 110. Once forwarded to and acknowledged by the applications server 110, the entries in the communications databases are deleted. One of ordinary skill in the art will appreciate that the contents, size, and scheduling of database entries may be varied in a variety of ways.

After mapping the wireless communication devices, the site controller 150 develops and maintains a database that includes the unique address for each wireless communication device, the number of transceiver/repeaters 125 in the downstream path, the address of each transceiver/repeater 125 in the downstream path, the upstream addresses, and the downstream addresses. The site controller 150 does not necessarily respond to the messages from wireless communication device s not listed in this database.

In addition to mapping the wireless communication devices, the site controller 150 may update the device database via the applications server 110. This update may add/delete wireless communication devices from the automated monitoring system 100, change the communications path of any or all of the wireless communication devices, or change the unique addresses of any or all of the wireless communication devices. Upon request of the applications server 110, the site controller 150 may transmit the device database to the applications server 110.

It should be noted that the databases enumerated above are merely exemplary, and other databases may be included as would be obvious to one of ordinary skill in the art.

The "normal" operating procedure described above is continued unless the site controller 150 receives an emergency message from a wireless communication device. The emergency message is transmitted unsolicited. The emergency message can be received by the site controller 150 either directly, via a repeater, or via a plurality of repeaters. Upon receipt of an emergency message, the site controller 150 immediately notifies the applications server 110 of the emergency message. In addition, the site controller 150 suspends the above polling for a predetermined time period. This suspension insures the receipt of any additional emergency messages. After the time period expires with no additional messages, the site controller 150 resumes polling.

To facilitate communications between the applications server 110 and the site controller 150, the site controller 110 maintains a database of contact information. By way of example, if the site controller 150 communicates via a network interface device 240, the site controller 150 can maintain a database of telephone numbers and IP addresses of the applications server 110.

During normal communications, the applications server 110 sends response messages. As stated above, one of ordinary skill in the art will appreciate that the applications server 110 and the site controller 150 may communicate via TCP/IP protocol or any other protocol. Exemplary requests include a "get file" request of the database and a "put file" request, which sends a file to the site controller 150.

Normal communications between the site controller 150 and the applications server 110 may also be interrupted by an emergency message. The emergency message originates at the site controller 150 and may include an emergency message from a remote device, a "file too large" message, and a site controller status change message to name a few. In the case of safety and security system devices such as smoke detectors, glass break alarms, etc., the site controller 150 may immediately generate an emergency message to the applications server 110 in the event a safety/security device fails to respond to a poll message.

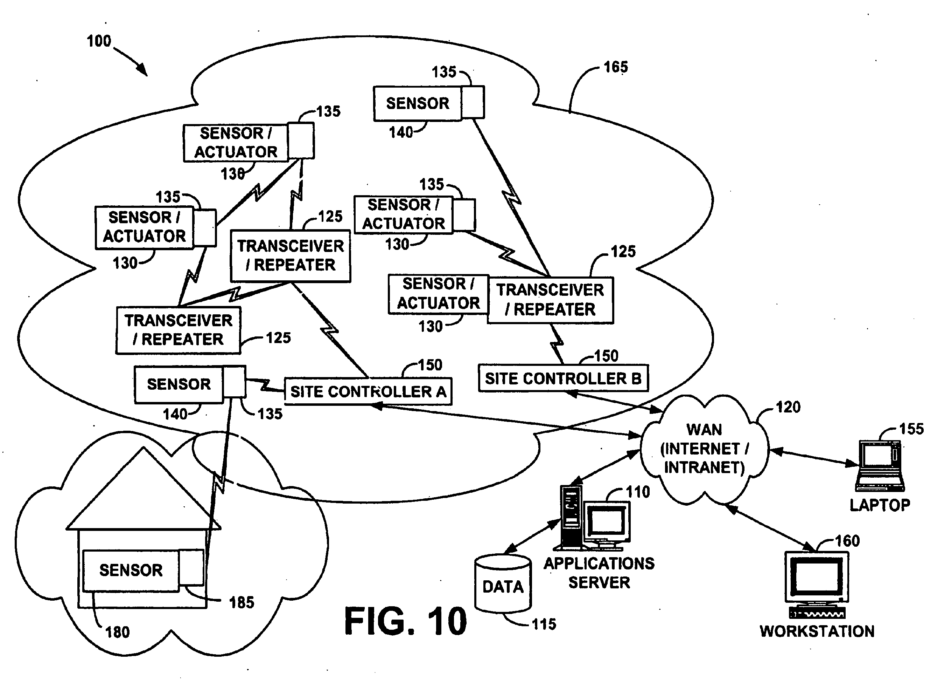

FIG. 10 sets forth an alternate embodiment of an automated monitoring system 100. Automated monitoring system 100 of FIG. 1 is shown with an additional sensor 180 and transceiver 185. The additional sensor 180 and transceiver 185 are shown to be communicating with, but outside of, the coverage area 165. In this example, the additional sensor 180 and transceiver 185 may be placed outside of the original control system. In order to communicate , the coverage area of transceiver 185 need only overlap the coverage area 165. By way of example only, the original installation may be an automated monitoring system 100 that monitors electricity usage via the utility meters in an apartment complex. Later a neighbor in a single family residence nearby the apartment complex may remotely monitor and control their thermostat by installing a sensor/actuator transceiver according to the present invention. The transceiver 185 then communicates with the site controller 150 of the apartment complex. If necessary, repeaters (not shown) can also be installed to communicate between the transceiver 185 and the apartment complex site controller 150. Without having the cost of the site controller 150, the neighbor may enjoy the benefits of the control system.

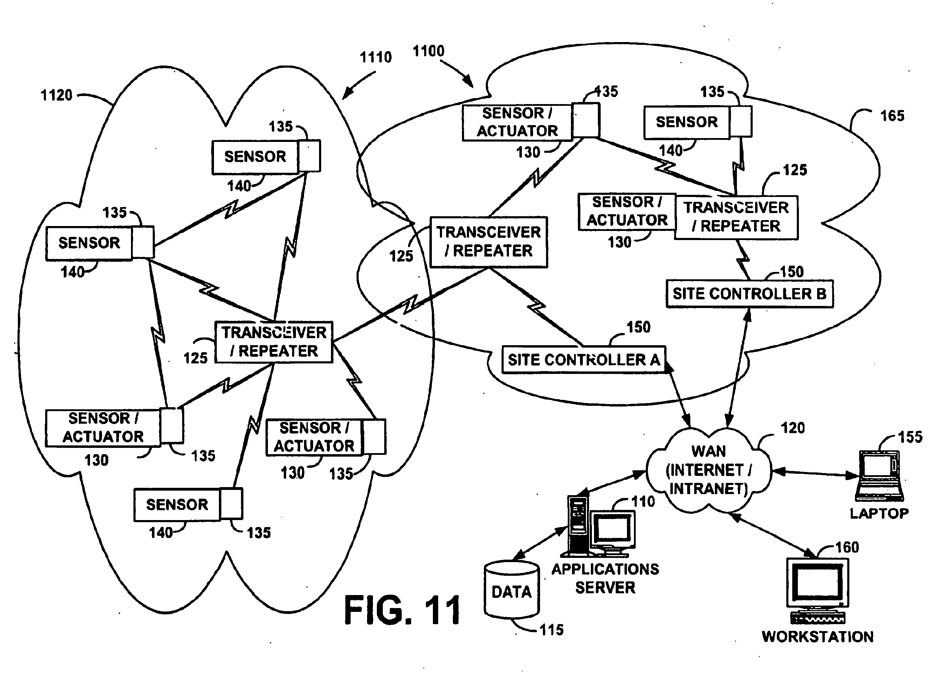

FIG. 11 illustrates an automated monitoring network 1100 according to the present invention for enabling multiple groups of remote devices associated with multiple wireless communication networks to be monitored and/or controlled via a common connection to a wide area network, such as a WAN 120. As illustrated in FIG. 11, automated monitoring network 1100 comprises a primary automated monitoring system, such as automated monitoring system 100, and a secondary wireless communication network 1110 in communication with automated monitoring system 100. Automated monitoring system 100 may operate and be configured as described above.

For example, automated monitoring system 100 may comprise a plurality of remote devices to be monitored and/or controlled, a plurality of communication devices, such as transceivers 125 and 135, a site controller 150, a WAN 120, and a host computer, such as an applications server 110, a laptop 155, or a workstation 160. Each of the plurality of remote devices may be in communication with one of the plurality of communication devices such that a primary wireless communication network is defined within coverage area 165. In this manner, the primary wireless communication network associated with automated monitoring system 100 provides communication between each of the remote devices within coverage area 165 and the site controller 150. Hereinafter, the remote devices associated with automated monitoring system 100 will be referred to as the first group of remote device.

Secondary wireless communication network 1110 may comprise a second group of remote devices to be monitored and/or controlled and a plurality of communication devices, such as transceivers 125 and 135. Each of the second group of remote devices in secondary wireless communication network 1110 may be in communication with one of the plurality of communication devices such that the secondary wireless communication network 1110 is defined within coverage area 1120. Secondary wireless communication network 1110 may operate and be configured in a manner similar to the primary wireless communication network of automated monitoring system 100. For example, secondary wireless communication network 1110 may employ transceivers 125 and 135 as described above. Secondary wireless communication network 1110 may also employ the communication protocol described above. Nonetheless, one of ordinary skill in the art will appreciate that other transceivers and other communication protocols may be employed.

As illustrated in FIG. 11, automated monitoring system 100 includes one or more site controllers 150 that manage communications with applications server 110 via WAN 120. Significantly, automated monitoring network 1100 according to the present invention enables the secondary wireless communication network 1110 to access WAN 120 via the primary wireless communications network. Thus, the secondary wireless communication network 1110 does not have to use a separate site controller 150 in order to communicate with applications servers 110, laptop 155, workstation 160, or other computing devices connected to WAN 120. Instead, the secondary wireless communication network 1110 may access the site controller 150 in automated monitoring system 100 via the primary wireless communication network. For example, at least one of the communication devices in the secondary wireless communications network 1110 may communicate with at least one of the communication devices in automated monitoring system 100. In this manner, messages may be exchanger between the site controller 150 of the primary wireless communication network and the second group of remote devices, thereby enabling the second group of remote devices to be monitored and/or controlled via the site controller 150 and/or the various computing devices connected to WAN 120.

The transceivers in automated monitoring system 100 and secondary wireless communication network 1110 may be configured to receive data signals from other devices and/or appliances via other wireless technologies, such as Bluetooth and the 802.11(b) standard adopted by the Institute of Electrical and Electronics Engineers (IEEE). For instance, the transceivers may be configured to implement the technology described in "Specification of the Bluetooth System: Specification Volume 1." February 22, 2001. In addition, infrared, ultrasonic, and other types of wireless transceivers may be employed as one of ordinary skill in the art will appreciate.

One of ordinary skill in the art will appreciate that automated monitoring network 1100 provides a number of advantages for monitoring and/or controlling remote devices. For example, automated monitoring network 1100 reduces the expense associated with monitoring and/or controlling the second group of remote devices in the secondary wireless communication network 1110. Specifically, the automated monitoring network 1100 according to the present invention eliminates the need for a separate site controller 150 and separate access to WAN 120. furthermore, automated monitoring network 1100 promotes cooperative relationships between organizations providing remote monitoring.

By way of example, automated monitoring system 100 may be used by an organization to enable customers to monitor and/or controls a first group of remote devices. For instance, automated monitoring system 100 may be used to provide individual residences in a managed apartment complex with the ability to remotely monitor and/or control a residential application, such as a residential security system. As described above and illustrated in FIG. 1, in this example automated monitoring system 100 may enable residents of the apartment complex to monitor and/or control the status of their residential security system via a laptop 155, workstation 160, or other computing device in communication with WAN 120.

Automated monitoring network 1100 enables a second group of remote devices associated with secondary wireless communication network 1110 to be monitored and/or controlled without obtaining a separate site controller 150 and separate access to WAN 120. As stated above, the secondary wireless communication network 1110 may access WAN 120 via the primary automated monitoring system 100. For example, in the above example, the second group of remote devices associated with secondary wireless communication network 1110 may be the electric meters for each of the residences in the managed apartment complex. The electric utility company that provides service to the managed apartment complex may desire to provide remote monitoring to the residents. Automated monitoring network 1100 according to the present invention enables the electric utility company to easily provide remote monitoring of the electric meters to the residents.

For instance, the electric utility company does not have to establish an independent automated monitoring system 100. Rather, the electric utility company only needs to establish a secondary wireless communication network 1110 as described above. Each of the electric meters may be communicatively coupled to a wireless transceiver, such as a transceiver 125 and transceiver 135 described above. In order to ensure communication throughout the entire coverage area 1120 of the electric meters associated with the secondary wireless communication network 1110, it may be necessary to implement additional wireless transceivers and/or repeaters as described above. In this manner, the collection of wireless transceivers associated with the electric meters defines the secondary wireless communication network 1110. As mentioned above, secondary wireless communication network 1110 may operate and be configured in a manner similar to the primary wireless communication network of automated monitoring system 100.

Given the existence of the secondary wireless communication network 1110, the electric utility company may provide remote monitoring of the electric meters to the residents via the automated monitoring system 100 for monitoring and/or controlling the residential security systems. The only requirement is that at least one of the wireless transceivers associated with the electric meters is in communication with at least one of the wireless transceivers associated with the residential security systems. Data messages related to the secondary wireless communication system 1110 may be passed through the primary wireless communication network to the site controller 150 and on to applications server 110 via WAN 120, thereby enabling the electric meters to be monitored and/or controlled via the site controller 150 and/or the various computing devices connected to WAN 120.

One of ordinary skill in the art will appreciate that the secondary wireless communication network 1110 and the automated monitoring system 100 may employ any of a variety of types of remote devices. Accordingly, the specific needs of the secondary wireless communication network 1110 and the automated monitoring system 100 may differ. For example, secondary wireless communication network 1110 and the automated monitoring system 100 may differ only in the type of devices being monitored and/or controlled. As in the above example of one of many possible embodiments, coverage area 165 of automated monitoring system 100 and coverage area 1120 of secondary wireless communication network 1110 may be substantially overlapping. However, in other embodiments of automated monitoring network 1100, coverage area 165 and coverage area 1120 only have to overlap such that at least one transceiver from both secondary wireless communication network 1110 and automated monitoring system 100 communicate.

One of ordinary skill in the art will appreciate that what has been described herein is a very top-level illustration of a system constructed in accordance with the automated monitoring system 100 and the automated monitoring network 1100 of the present invention. In accordance with the invention, a variety of remote devices, such as utility meter devices, personal security devices, household devices and appliances, and other remote devices employing a sensor and/or an actuator, may be monitored and/or controlled from a remote location via a computing device connected to WAN 120. The data and command transmissions may be transmitted and received by the site controller 150 connected to WAN 120. Site controller 150 is further in communication with the wireless communication devices within coverage area 165. The data and command transmissions may be relayed via the various wireless communication devices defining the communication path until they reach a designated destination or the site controller 150.

It will be further appreciated that automated monitoring system 100 in accordance with the present invention may be used in a variety of environments. In one embodiment, automated monitoring system 100 may be employed to monitor and record utility usage by residential and industrial customers, to transfer vehicle diagnostics from an automobile via a wireless transceiver integrated with the vehicle diagnostics bus to a local transceiver that further transmits the vehicle information through a local gateway onto a WAN, to monitor and control an irrigation system, to automate a parking facility, to monitor and control a residential security system, etc, which are described in more detail in the commonly assigned U. S. Patent Application entitled, "System and Method for Monitoring and Controlling Residential Devices," issued Serial No. 09/704,150.

Automated monitoring system 100 may be adapted to monitor and apply control signals in an unlimited number of applications. By way of example only, the wireless communication devices may be adapted for use with any associated device, such as, for example, pay type publicly located telephones, cable television set top boxes, utility meters, and residential appliances and/or devices to enable a remote controllable home automation and security system.

In a geographic area appropriately networked with permanently located stand-alone transceivers 125, personal transceivers (not shown) may be used to monitor and control personnel access and egress from specific rooms or portions thereof within a controlled facility. Personal transceivers may further be configured to transfer personal information to public emergency response personnel, to transfer personal billing information to vending machines, or to monitor individuals within an assisted living community.

Wireless communication devices using the open data packet protocol of the present invention may be integrated to monitor and control a host of industrial and business applications as well. By way of example only, building automation systems, fire control systems, alarm systems, industrial trash compactors, and building elevators may be monitored and controlled. In addition, courier drop boxes, time clock systems, automated teller machines, self-service copy machines, and other self-service devices may be monitored and controlled as appropriate. By way of further example, a number of environment variables that require monitoring may be integrated with automated monitoring system 100 to permit remote monitoring and control. For instance, light levels in the area adjacent to automated teller machines must meet minimum federal standards. Also, the water volume transferred by water treatment plant pumps, smokestack emissions from a coal burning power plant, or a coke fueled steel plant oven may be remotely monitored.

The wireless communication devices using the open data packet protocol of the present invention may be further integrated with a voice-band transceiver having multiple function buttons. As a result, when a person presses, for example, the emergency button on his/her transmitter, medical personnel, staff members, or others may respond by communicating via two-way radio with the party in distress. In this regard, each transceiver may be equipped with a microphone and a speaker that would allow a person to communicate information such as their present emergency situation, their specific location, *etc*.

The foregoing description has been presented for purposes of illustration and description. It is not intended to be exhaustive or to limit the invention to the precise forms disclosed. Obvious modifications or variations are possible in light of the above teachings. For example, it should be appreciated that, in some implementations, the transceiver unique address is not necessary to identify the location of the transceiver. Indeed, in implementations where the transceiver is permanently integrated into an alarm sensor other stationary device within a system, then the applications server 110 and/or the site controller 150 may be configured to identify the transmitter location by the transmitter unique address alone. It will be appreciated that, in embodiments that do not utilize wireless transceiver/repeaters 125, the wireless transmitters 145 and/or wireless transceivers 135 may be configured to transmit at a higher power level, in order to effectively communicate with the site controller 150.

The embodiment or embodiments discussed were chosen and described to illustrate the principles of the invention and its practical application to enable one of ordinary skill in the art to utilize the invention in various embodiments and with various modifications as are suited to the particular use contemplated. All such modifications and variations are within the scope of the invention as determined by the appended claims when interpreted in accordance with the breadth to which they are fairly and legally entitled. The reference signs contained in the claims are not limiting the extent of the matter protected by the claims. Their sole function is to make the claims easier to understand.

## Claims

1. A wireless communication network adapted for use in an automated monitoring system (100) for monitoring and controlling a plurality of remote devices via a host computer connected to a wide area network (120), the wireless communication network comprising:
a plurality of wireless communication means (135) having unique first identifiers, each of the plurality of wireless communication means configured to receive a sensor data signal from one of the plurality of remote devices (140) and transmit an original data message using a predefined wireless communication protocol, the original data message comprising the corresponding unique first identifier and sensor data signal,
wherein each of the pluralilty of wireless communication means are further configured to receive the original data message transmitted by one of the other wireless communication means and transmit a first repeated data message using the predefined communication protocol, the fisrt repeated data message comprising the original data message that includes the sensor data signal and the corresponding unique first identifier:
a means for receiving (225) each of the original data messages and the repeated data messages;
a means for identifying (235), for each received message, the remote device associated with the corresponding sensor data signal;
a means for providing information (150) related to the sensor data signal to the wide area network (120) for delivery to the host computer; and
a plurality of repeating means (125) having unique second identifiers, each of the plurality of repeating means in communication with at least one of the plurality of wireless communication means (135) and each of the plurality of repeating means (125) comprising a means for receiving the original data message transmitted by at least one of the plurality of wireless communication means and a means for transmitting a second repeated data message using the predefined communication protocol, the second repeated data message including the sensor data predefined communication protocol, the second repeated data message including the sensor data signal from the original data message and a unique second identifier corresponding to the repeating means.

2. The wireless communication network of claim 1, further comprising a means for providing a command message to one of the plurality of wireless communication means, wherein each of the wireless communication means further comprise a means for transmitting, in response to the command message, the original data message, wherein the original data message corresponds to the command message.

3. The wireless communication network of claim 1, wherein the predefined communication protocol comprises a data packet comprising:
a means for identifying the receiver of the data packet;
a means for Identifying the sender of the data packet; and
a command means for specifying a predefined command code.

4. The wireless communication network of claim 1, wherein the wireless communication means are designed as wireless transceivers (135).

5. The wireless communication network of claim 4, wherein the plurality of wireless transceivers (135) are further configured to receive signals vie Bluetooth technology.

6. The wireless communication network of claim 5, **characterized in that** the data packet further comprises:
a packet length indicator which indicates a total number of bytes in the current packet;
a total packet indicator which indicates the total number of packets in the current message;
a current packet indicator which identifies the current packet; and
a message number identifying the current message.

## Patentansprüche

1. Drahtloses Kommunikationsnetzwerk, welches für die Benutzung in einem automatisierten Überwachungssystem (100) zum Überwachen und Kontrollieren bzw. Regeln einer Mehrzahl von entfernten Geräten über einen mit einem WAN ("wide area network"; 120) verbundenen Host-Computer angepasst ist, wobei das drahtlose Kommunikationsnetzwerk Folgendes aufweist:
eine Mehrzahl von drahtlosen Kommunikationsmitteln (135) mit eindeutigen ersten Kennungen, wobei jedes der Mehrzahl drahtloser Kommunikationsmittel zum Empfangen eines Sensordatensignals von einem der Mehrzahl entfernter Geräte (140) und zum Übertragen einer originalen Datennachricht unter Benutzung eines vorbestimmten drahtlosen Kommunikationsprotokolls konfiguriert ist, wobei die originale Datennachricht die korrespondierende eindeutige erste Kennung und das Sensordatensignal aufweist,
wobei jedes der Mehrzahl drahtloser Kommunikationsmittel weiterhin zum Empfangen der von einem der anderen drahtlosen Kommunikationsmitteln übertragenen originalen Datennachricht und zum Übertragen einer ersten wiederholten Datennachricht unter Benutzung des vorbestimmten Kommunikationsprotokolls konfiguriert ist, wobei die erste wiederholte Datennachricht die das Sensordatensignal und die korrespondierende eindeutige erste Kennung aufweisende originale Datennachricht aufweist;
ein Mittel zum Empfangen (225) jeder der originalen Datennachrichten und der wiederholten Datennachrichten;
ein Mittel zum Identifizieren (235) des dem korrespondierenden Sensordatensignal zugeordneten entfernten Geräts für jede empfangene Nachricht:
ein Mittel zum Bereitstellen von sich auf das Sensordatensignal beziehenden Informationen (150) an das WAN (120) zur Übergabe an den Host-Computer; und
eine Mehrzahl von wiederholenden Mitteln (125) mit eindeutigen zweiten Kennungen, wobei jedes der Mehrzahl wiederholender Mittel mit mindestens einem der Mehrzahl drahtloser Kommunikationsmittel (135) kommuniziert und jedes der Mehrzahl wiederholender Mittel (125) ein Mittel zum Empfangen der originalen Datennachricht, die über mindestens eines der Mehrzahl drahtloser Kommunikationsmittel übertragen wurde, und ein Mittel zum Übertragen einer zweiten wiederholten Datennachricht unter Benutzung des vorbestimmten Kommunikationsprotokolls aufweist, wobei die zweite wiederholte Datennachricht das Datensignal von der originalen Datennachricht und eine mit dem wiederholenden Mittel korrespondierende eindeutige zweite Kennung aufweist.

2. Drahtloses Kommunikationsnetzwerk nach Anspruch 1, weiterhin mit einem Mittel zum Bereitstellen einer Befehlsnachricht an eines der Mehrzahl drahtloser Kommunikationsmittel, wobei jedes der drahtlosen Kommunikationsmittel weiterhin ein Mittel zum Übertragen der originalen Datennachricht als Antwort auf die Befehlsnachricht aufweist, wobei die originale Datennachricht mit der Befehlsnachricht korrespondiert.

3. Drahtloses Kommunikationsnetzwerk nach Anspruch 1, wobei das vorbestimmte Kommunikationsprotokoll ein Datenpaket mit Folgendem aufweist:
ein Mittel zum Identifizieren des Empfängers des Datenpakets;
ein Mittel zum Identifizieren des Absenders des Datenpakets; und
ein Befehlsmittelsmittel zum Spezifizieren eines vorbestimmten Befehlscodes.

4. Drahtloses Kommunikationsnetzwerk nach Anspruch 1, wobei die drahtlosen Kommunikationsmittel als drahtlose Transceiver (135) ausgebildet sind.

5. Drahtloses Kommunikationsnetzwerk nach Anspruch 4, wobei die Mehrzahl drahtloser Transceiver (135) weiterhin zum Empfangen von Signalen über Bluetooth konfiguriert sind.

6. Drahtloses Kommunikationsnetzwerk nach Anspruch 5, **dadurch gekennzeichnet, dass** das Datenpaket weiterhin Folgendes aufweist:
einen Paketlängenanzeiger, der die Gesamtanzahl von Bytes in dem aktuellen Paket anzeigt;
einen Paketgesamtanzeiger, der die Gesamtanzahl von Paketen in der aktuellen Nachricht anzeigt;
einen Aktuellpaketanzeiger, der das aktuelle Paket identifiziert; und
eine Nachrichtennummer, die die aktuelle Nachricht identifiziert.

## Revendications

1. Réseau de communication sans fil conçu pour être utilisé dans un système de surveillance automatisé (100) pour surveiller et commander une pluralité de dispositifs à distance par l'intermédiaire d'un ordinateur hôte connecté à un réseau étendu (120), le réseau de communication sans fil comprenant:
une pluralité de moyens de communication sans fil (135) ayant des premiers identifiants uniques, chacun de la pluralité de moyens de communication sans fil étant configuré pour recevoir un signal de données de capteur de l'un de la pluralité de dispositifs à distance (140) et transmettre un message de données original en utilisant un protocole de communication sans fil prédéfini, le message de données original comprenant le premier identifiant unique correspondant et le signal de données de capteur,
dans lequel chacun de la pluralité de moyens de communication sans fil est en outre configuré pour recevoir le message de données original transmis par l'un des autres moyens de communication sans fil et transmettre un premier message de données répété en utilisant le protocole de communication prédéfini, le premier message de données répété comprenant le message de données original qui comprend le signal de données de capteur et le premier identifiant unique correspondant;
un moyen pour recevoir (225) chacun des messages de données originaux et des messages de données répétés;
un moyen pour identifier (235), pour chaque message reçu, le dispositif à distance associé au signal de données de capteur correspondant;
un moyen pour fournir des informations (150) relatives au signal de données de capteur au réseau étendu (120) pour une distribution à l'ordinateur hôte; et
une pluralité de moyens de répétition (125) ayant des deuxièmes identifiants uniques, chacun de la pluralité de moyens de répétition étant en communication avec au moins l'un de la pluralité de moyens de communication sans fil (135), et chacun de la pluralité de moyens de répétition (125) comprenant un moyen pour recevoir le message de données original transmis par au moins l'un de la pluralité de moyens de communication sans fil et un moyen pour transmettre un deuxième message de données répété en utilisant le protocole de communication prédéfini, le deuxième message de données répété comprenant le signal de données de capteur provenant du message de données original et un deuxième identifiant unique correspondant au moyen de répétition.

2. Réseau de communication sans fil selon la revendication 1, comprenant en outre un moyen pour fournir un message de commande à l'un de la pluralité de moyens de communication sans fil, dans lequel chacun des moyens de communication sans fil comprend en outre un moyen pour transmettre, en réponse au message de commande, le message de données original, dans lequel le message de données original correspond au message de commande.

3. Réseau de communication sans fil selon la revendication 1, dans lequel le protocole de communication prédéfini comprend un paquet de données comprenant:
un moyen pour identifier le destinataire du paquet de données;
un moyen pour identifier l'expéditeur du paquet de données; et
un moyen de commande pour spécifier un code de commande prédéfini.

4. Réseau de communication sans fil selon la revendication 1, dans lequel les moyens de communication sans fil sont conçus en tant qu'émetteurs-récepteurs sans fil (135).

5. Réseau de communication sans fil selon la revendication 4, dans lequel la pluralité d'émetteurs-récepteurs sans fil (135) sont en outre configurés pour recevoir des signaux par la technologie Bluetooth.

6. Réseau de communication sans fil selon la revendication 5, **caractérisé en ce que** le paquet de données comprend en outre:
un indicateur de longueur de paquet qui indique un nombre total d'octets dans le paquet actuel;
un indicateur de nombre total de paquets qui indique le nombre total de paquets dans le message actuel;
un indicateur de paquet actuel qui identifie le paquet actuel; et
un numéro de message identifiant le message actuel.
